# EUROPEAN PATENT APPLICATION

(11) **EP 1 250 013 A1**
(43) Date of publication of application: **16.10.2002**
(21) Application number: 00957166.2
(22) Date of filing: 24.08.2000
(51) Int. Cl.: H04N 13/00

(54) **METHOD FOR DISPLAYING THE IMAGE OF AN OBJECT**

(30) Priority: 02.09.1999 RU 99118613
(71) Applicant: Obschestvo S Ogranichennoi Otvetstvennostiju "Neirok", Moscow, 123362 (RU)
(72) Inventor: PUTILIN, Andrei Nikolaevich, Moscow, 109462 (RU); LUKIYANITSA, Andrei Alexandrovich, Moscow, 111396 (RU)
(74) Representative: Mohnhaupt, Dietrich
(86) International application number: RU0000343
(87) International publication number: WO01017274

(57) **Abstract**

The invention relates to optics and more particularly to methods and systems for displaying stereoscopic and similar effects.

According to the invention, an image of an object is displayed based on two or several determined two-dimensional pictures, whereby said pictures are formed from several intercommunicating areas, two or more screens, which are located one after the other and consist of multiple facets, are used to display visual information having the form of light signals sent from said facets towards the spectators; and visual information corresponding to a part of the areas of each two-dimensional picture is displayed on the screen. Such an embodiment of the inventive method mode makes it possible to improve the quality of the obtained image by fully using the facets of all screens for the transmission of information.

## Description

### Field of technology:

Optics, particularly methods and systems of generating and displaying stereoscopic effects and the like.

### State of the art:

Methods of displaying an image of an object are known whereby a stereoscopic effect is produced by means of two specific two-dimensional representations captured from two different imaging points, whereby two screens are provided which are disposed sequentially one behind the other, one such screen being the front screen disposed closer to the viewer, which screen is comprised of a plurality of cells and is transparent, and the second such screen being the rear screen, which latter bears visual information in the form of light-emitting vertical bands corresponding to the aforesaid two-dimensional representations. The transparency of given cells of the front screen varies such that light signals from the rear screen which impinge on the front screen are divided into light signals which arrive at the right eye of the viewer and light signals which arrive at the left eye of the viewer, as a result of which each eye of the viewer sees only one two-dimensional image, and the two two-dimensional images together generate a stereoscopic image of the object (U.S. Pat. 4,717,949).

With the use of such a method, the sharpness of the image of the object which is obtained is limited, because one can utilize only one-half the area of one screen (viz. the rear screen) to produce each of the described two-dimensional images. In addition, the method is susceptible to pseudoscopic (inverse) effects, which degrade or distort the images obtained.

Another method of producing an image of an object is known whereby a plurality of specific two-dimensional representations are employed, whereby visual information in the form of light signals is developed via a plurality of transparent screens disposed one behind the other, which signals are directed toward the viewer. In this method, the dispersion characteristics of the respective screens are varied (U.S. Pat. 5,764,317).

With this method, the specific two-dimensional representations which are used are from a plurality of views of the object, disposed at different distances from the eyes of the viewer, and the visual information on a given screen is generated sequentially in time with a frequency which effectively exceeds the limit of perception of visual change of images -- as a result of which the viewer perceives an image which is a composite of a plurality of the representations on different screens disposed at different distances from him. His perception is of a three-dimensional image which is close to a faithful three-dimensional representation of the object.

However, the method is subject to visual superposition of several elements of the images of different views of the object, which leads to degradation of the quality of the perceived image.

The art which is the closest to the method of producing (or reproducing) an image of an object according to the present Application is a method based on a plurality of specific two-dimensional representations formed from a (large) number of mutually differentiable areas, and employing a plurality of transparent screens disposed one behind the other, each of which screens is comprised of a (large) number of cells, wherewith optical information is generated via said screens which information is directed from the cells toward the viewer (U.S. Pat. 5,745,197 (1998), (etc. classes)).

In this method, the specific two-dimensional representations employed are contours of cross-sections of the object which are delivered at various distances from the eyes of the viewer. The viewer perceives the received optical information as a three-dimensional image. However, this method may only be used for objects for which the contours of cross sections closer to the eyes of the viewer are interior to the contours of all sections farther from the eyes of the viewer, which limits the applicability of this method.

### Disclosure of the invention

The underlying problem of the invention was to devise a method of producing or reproducing a particular image of an object, such that the image produced or reproduced is a stereoscopic representation or the like of high quality.

This problem is solved by the present invention in that, in producing or reproducing an image of an object based on at least two two-dimensional representations formed from a large number of mutually differing component areas, at least two screens are provided which are disposed sequentially, each of which screens being comprised of a plurality of cells, at least one of the screens being disposed closer to the viewer and being transparent, said screens delivering visual information in the form of light signals directed from particular cells to the viewer. According to the invention, each of the at least two said screens develops particular visual information corresponding to a part of the component areas (i.e. some of the component areas but not necessarily all of them) of each of the said two-dimensional representations.

Such a method increases the quality of the image obtained, due to complete utilization of the cells of all the screens for transmission of information.

The described visual information corresponding to a part of the said component areas of each said two-dimensional representations may be developed simultaneously on each of the said screens. Such an embodiment of the method improves the reproduction quality of the image as perceived by the viewer.

As the said specific two-dimensional representations one may employ respective two-dimensional representations of aspects of the object recorded from at least two viewpoints disposed a distance apart corresponding to the interocular distance between the right and left eye of a person. Such an embodiment of the method provides a proper stereoscopic effect.

A system for accomplishing the method may comprise:
-- at least three screens (A, B, C) disposed one behind the other, each of which screens is comprised of a number of cells;
-- means of controlling said screens, comprising means intended to regulate the light emission of the light-emitting cells of the screen A which screen is disposed farthest from the at least one viewer, and further comprising means intended to regulate the transparency of the remaining screens (B, C);
-- at least one memory block;
-- at least one processor block; and
-- at least one block for control of cells of the screens;
the system further comprising:
-- a program for operating the processor block;
-- information about specific two-dimensional representations of at least two aspects of the object;
-- information about the mutual disposition of the said screens; and
-- information about the position of the right and left eye of each of the (at least one) viewer(s) in relation to the screen (C) which is closest to the respective viewer.

In this system, the following actions are performed:
-- signals are input into the memory, via the processor employing the program, which signals correspond to the light emission from cells of screen A and the transparency of cells of screens B and C;
-- light signals are determined which can be sent from the cells of all of the screens toward the right and left eye of each of the at least one viewer;
-- the said determined light signals which might be directed toward a given eye are compared with corresponding component areas of a specific two-dimensional representation of the respective aspect of the object (information about which representation has been entered into the system);
-- for each cell of each screen, a signal is established which represents the difference between the particular determined light signal which might be directed toward a given eye and the particular corresponding component area of a specific two-dimensional representation of the respective aspect of the object, which representation the given eye ought to see;
-- each such difference signal which is established is compared with a particular threshold signal, and,
-- if the value of the difference signal is greater than the value of the threshold signal, then, in accordance with the above-mentioned program which has been input, for operating the processor, a procedure is performed for minimization of the difference, whereby changes are made in the aforesaid signals corresponding to specific values of light-emission by a part of the cells of screen A and specific values of the transparency of a part of the cells of screens B and C; and
these actions are reiterated until the difference signal has been reduced to a value below the given threshold signal, or until a specific time interval has elapsed; following which,
signals are introduced into the controller for the cells of the screens, which controller serves to regulate the corresponding light-emitting cells of screen A and to control the transparency of the corresponding cells of screens B and C, for the operation of said screens.

With this embodiment of the method, the described iterative sequence can be achieved using contemporary computer technology.

It is also possible to determine the number of viewers and the position of the right and left eye of each viewer, and to carry out the above-described process to realize the described method in accordance with the positions of the eyes of all of the viewers. This embodiment of the method allows visual information to be presented to a plurality of viewers simultaneously, wherewith every viewer will perceive a high-quality stereoscopic effect.

When the initial signals are introduced via the processor to the memory, which signals correspond to specific values of light-emission by the cells of screen A and specific values of the transparency of the cells of screens B and C, such signals entered into the memory may comprise randomly distributed signals. This embodiment of the method allows acceleration of the method initially, in that the number of iterations of the above-described sequence of actions is reduced.

For the changing of the aforesaid information concerning two-dimensional representations of at least two aspects of the object, the signals entered into the memory via the processor may be signals which correspond to specific values of light-emission by the cells of screen A and specific values of the transparency of the cells of screens B and C, for the purpose of changing said information; also, signals in the nature of noise may be added which signals correspond to the transparency of respective cells of at least one of screens B and C. This embodiment of the method allows the process to be accelerated at each change of the said information concerning the two-dimensional representations.

In the event of a change in position of the eyes of at least one viewer, one may modify the information about said eye positions which is entered into the system employed to carry out the above-described actions. This embodiment of the method preserves the high quality of reproduction of the visual information for a given viewer even if the viewer changes the position of his eyes.

The invention is described further hereinbelow on the basis of an embodiment as a non-limiting Example, with reference to the accompanying drawings.

### Brief description of the drawings

Fig. 1 is a schematic illustration of a system intend for realization of an inventive method of displaying or reproducing an image of an object; and
Fig. 2 is a schematic illustrating the passage of light beams through the optical part of the system.

### Detailed description of a preferred embodiment of the invention

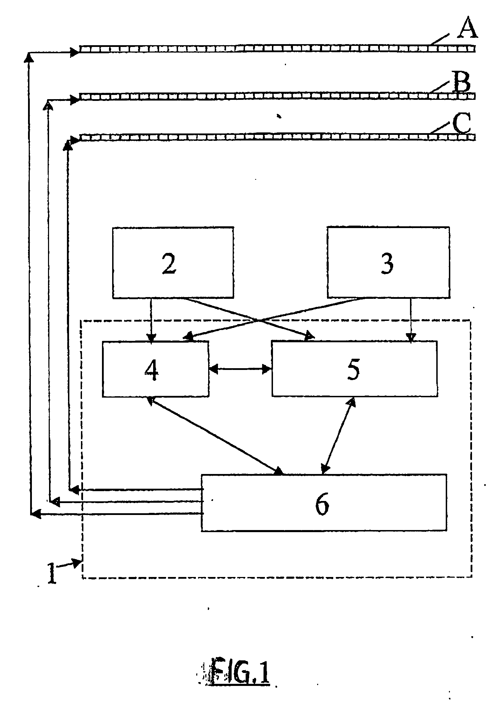

As illustrated in Fig. 1, the system for realization of the method of producing (or reproducing) an image of an object is comprised of: three screens A, B, C disposed one behind the other, means 1 of controlling the screens A, B, C, means 2 of inputting information, and means 3 of determining the number of viewers, and the positions of the right and left eye, respectively, of each viewer.

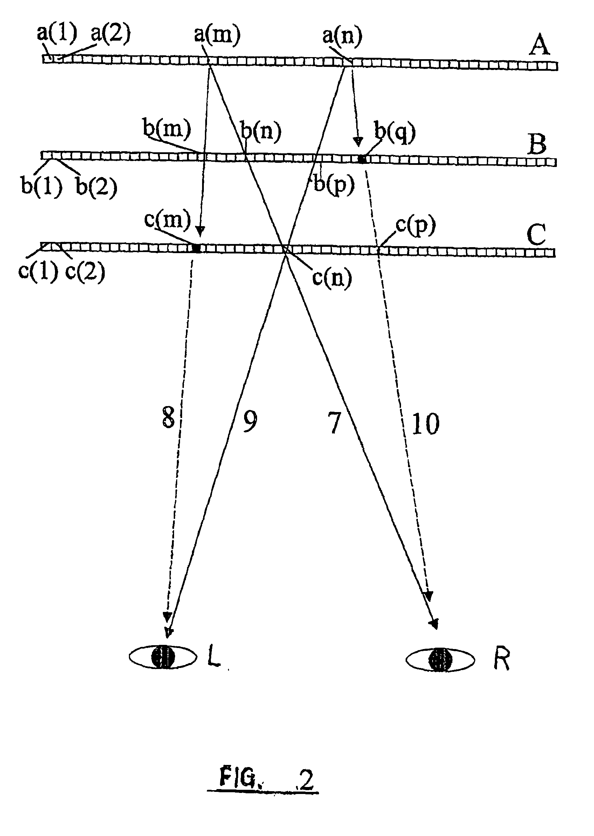

Each of screens A, B, and C is formed from a plurality of cells (not designated with reference numerals in Fig. 1) disposed in a matrix array (horizontal rows and vertical columns). Screen A is comprised of light-emitting cells a(1),a(2), ... a(m), ... a(n), etc. (Fig. 2). Screens B and C are transparent (i.e. light-permeable) and are comprised of cells b(1),b(2), ... b(m), ... b(n), etc., and c(1),c(2) ... c(m), ... c(n), etc., respectively, the transparency of which cells of screens B and C can be regulated.

Screen A is disposed farther from the eyes of the viewer(s) than are screens B and C (eyes of viewer(s) are not shown or designated in Fig. 1).

The control means 1 for the screens (Fig. 1), which control means are provided for controlling the light emissions from the cells of screen A and controlling the transparency of the cells of screens B and C, comprises a memory block 4, a processor block 5, and a control block 6 for control of lit., "by" the cells of the screens (A, B, C).

The information input means 2 may comprise a known device, not further described herein.

The means 3 for determining the number of viewers and the positions of the right and left eye, respectively, of each viewer, may comprise a known device, not further described herein.

The memory block 4 and processor block 5, of means 1 (Fig. 1), are interconnected and are connected to means 2 and 3; control block 6 of means 1 is connected to memory block 4, processor block 5, and the screens (A, B, C).

All elements of the system are connected to an electrical power source (not illustrated and not designated).

The method of producing an image of an object is realized as follows:

The number of viewers, and the positions of the right and left eye, respectively, of each viewer, with respect to screen C, are determined with the aid of means 3, and the corresponding information is input to the system. Via means 2 there are input into the system:
-- the program for operating the processor block 5;
-- information about the mutual positions of the screens (A, B, C); and
-- information about the specific two-dimensional representations (not less than two such representations) formed by the plurality of mutually differentiable areas, in the form of discrete information about each area of each image. The two-dimensional representations employed are two-dimensional representations of aspects of the object recorded from at least two viewpoints disposed a distance apart corresponding to the interocular distance between the right and left eye of a person.

Signals corresponding to the emission intensity of a portion of the group of cells of screen A (not including illuminating cells of the screen A already switched-on), and signals corresponding to the transparency of cells of screens B and C, are entered into the memory 4 from the processor 5. In this process, at the initial moment the signals input into the memory 4 are randomly distributed signals.

The processor 5:
-- determines light signals which eventually might be (but are not yet) directed from the cells of all the screens toward the right and left eye of each given viewer;
-- compares these determined signals which eventually might be (but are not yet) directed toward each given eye with the corresponding parts of a given two-dimensional representation of the corresponding aspect of the object, information concerning which representation has been entered into the system;
-- for each cell of each screen, determines a signal representing the difference between:
   the determined light signal which eventually might be (but is not yet) directed toward a given eye and
   the corresponding part of the given two-dimensional representation which said eye ought to see; and
-- compares the said difference signal which is obtained to a specific threshold signal representing the permissible error.

If the value of the difference signal is less than the value of the threshold signal, then the processor 5 delivers signals to the controller 6, which controller (consequently) switches-on the corresponding light-emitting cells of screen A and which controller also implements control of the transparency of the corresponding cells of screens B and C.

If the value of the difference signal is greater than the value of the threshold signal, then, in accordance with the above-mentioned program which has been input, for operating the processor 5, a procedure is performed for minimization of the difference, for which purpose various signals corresponding to specific values of light-emission by part of the cells of screen A and specific values of transparency of cells of screens B and C are input into the memory 4. These actions are reiterated until the difference signal has been reduced to a value below the given threshold signal, or until a specific time interval has elapsed; following which, signals are introduced into the controller 6 from the processor 5, which controller (consequently) switches-on the corresponding light-emitting cells of screen A and which controller also implements control of the transparency of the corresponding cells of screens B and C, in such a manner that visual information in the form of light signals is delivered to each viewer, which signals have originated from light-emitting cells of screen A and have passed through cells of screens B and C. In this process, over the extent of each screen the following events occur simultaneously:
- - development of visual information about a portion of the component areas of each given two-dimensional representation; and
- - screening, by certain cells of screens B and C (including cells bearing visual information), of light signals from preceding screens, which signals ought not to reach the corresponding eye of the corresponding viewer.

As a result, each eye of each viewer receives information only about a specific two-dimensional representation; whereby the viewer sees a stereoscopic image of the object.

For example, visual information about a given component area of a first representation of the object, bearing information in the form of a light signal in direction 7 from cell a(m) of screen A (Fig. 2) passes through the transparent cell b(n) of screen B and the transparent cell c(n) of screen C and reaches the eye R (right eye) of the viewer; and visual information in direction 8 from cell a(m) of screen A passes through the transparent cell b(m) of screen B but does not pass through the non-transparent cell c(m) of screen C to eventually reach the left eye L of the viewer. Visual information about the corresponding component area of the second representation of the object, said information being in the form of a light signal in direction 9 from light-emitting cell a(n) of screen A passes through the transparent cell b(p) of screen B and the transparent cell c(n) of screen C and reaches the left eye L of the viewer, whereas the light signal in direction 10 from light-emitting cell a(n) of screen A does not pass through the non-transparent cell b(q) of screen B to eventually reach the right eye R of the viewer. With this arrangement, the cells of screen A collectively bear a part of the visual information about the first representation (i.e. image) of the object and a part of the information about the second representation i.e. image? of Lhe object; further, the cells of screen B collectively bear a part of the visual information about the first representation i.e. image? of the object and a part of the information about the second representation i.e. image? of the object; and the remaining part of the visual information about the first and second representations i.e. images? of the object is borne collectively by the cells of screen C. Two screens are sufficient to realize the invention; however, optimal results may be obtained with the use of three screens; and it is possible to use more than three screens.

To change information about two-dimensional representations which has been input into the system, signals are introduced to memory 4 via the processor 5, which signals correspond to values of light emissions from cells of screen A and to values of transparency of cells of screens B and C; also, noise signals (sic -- does not say "noise-correcting signals") can be added which correspond to values of transparency of cells of screens B and C.

If the positions of the eyes of a given viewer are changed, modified information about said eye positions is entered into the system.

Thus (to summarize the advance represented by the invention), the invention enables one to produce (or reproduce) an image of an object whereby a stereoscopic effect is produced, for one or a plurality of viewers, which viewers may change their positions during the demonstration of the object.

### Potential commercial applications

The invention may be used in television, video technology, computer monitors, and control systems.

## Claims

1. A method of displaying an image of an object based on at least two two-dimensional representations formed from a number of mutually differing component areas, wherewith at least two screens are provided which are disposed sequentially one behind the other, each of which screens being comprised of a plurality of cells, at least one of the screens being disposed closer to at least one viewer and being transparent, said screens delivering visual information in the form of light signals directed from particular cells to the at least one viewer, **characterized in that** each of the at least two said screens develops particular visual information corresponding to a part of the component areas of each of the said two-dimensional representations.

2. The method according to claim 1, **characterized in that** said visual information corresponding to a part of the said component areas of each of the at least two said two-dimensional representations is developed simultaneously on each of the said screens.

3. The method according to claim 1 or 2, **characterized in that**, to serve as each of the said specific two-dimensional representations, one employs respective two-dimensional representations of aspects of the object recorded from at least two viewpoints disposed at a distance from each other corresponding to the interocular distance between the right and left eye of a viewer.

4. The method according to claim 3, **characterized in that**:
in a system comprised of:
(1) at least three screens (A, B, C) disposed one behind the other, each of which screens is comprised of a plurality of cells;
(2) means of controlling said screens, comprising means intended to regulate the light emission of the light-emitting cells of the screen A which screen is disposed farthest from the at least one viewer, and further comprising means intended to regulate the transparency of the remaining screens (B, C);
(3) at least one memory block;
(4) at least one processor block; and
(5) at least one block for control of cells of the screens;
and further comprising
(6) a program for operating the processor block;
(7) information about specific two-dimensional representations of at least two aspects of the object;
(8) information about the mutual disposition of the said screens; and
(9) information about the position of the right and left eye of each of the (at least one) viewer(s) in relation to the screen (C) which is closest to the respective viewer;
the following actions are performed:
- signals are input into the memory, via the processor employing the program, which signals correspond to the light emission from cells of screen A and the transparency of cells of screens B and C;
- light signals are determined which can be sent from the cells of all of the screens toward the right and left eye of each of the (at least one) viewer(s);
- the said determined light signals which might be directed toward each given eye are compared with corresponding component areas of a specific two-dimensional representation of the respective aspect of the object (information about which representation has been entered into the system);
- for each cell of each screen, a signal is established which represents the difference between the particular determined light signal which might be directed toward the given eye and the particular corresponding component area of a specific two-dimensional representation of the respective aspect of the object, which representation the given eye ought to see;
- each such difference signal which is established is compared with a particular threshold signal, wherewith:
if the value of the difference signal is greater than the value of the threshold signal, then, in accordance with the above-mentioned program which has been input, for operating the processor, a procedure is performed for minimizing the difference, whereby changes are made in the aforesaid signals corresponding to specific values of light-emission by a part of the cells of screen A and specific values of the transparency of a part of the cells of screens B and C; and
these actions (set forth in the preceding paragraphs (b) and (c)) are reiterated until the difference signal has been reduced to a value below the given threshold signal, or until a specific time interval has elapsed; following which,
signals are introduced into the controller for the cells of the screens, which controller serves to regulate the corresponding light-emitting cells of screen A and to control the transparency of the corresponding cells of screens B and C, for the operation of said screens.

5. A method according to claim 4; **characterized in that** the number of viewers and the position of the right and left eye of each viewer are determined, and the above-described process (actions (b) through (e), supra) is carried out in accordance with the said positions of the eyes of all of the viewers.

6. The method according to claim 4 or 5, **characterized in that**, when the initial signals are introduced via the processor to the memory, which signals correspond to specific values of light-emission by the cells of screen A and specific values of the transparency of the cells of screens B and C, such signals entered into the memory are comprised of randomly distributed signals.

7. The method according to claim 4 or 5, **characterized in that**, for the changing of the aforesaid information concerning two-dimensional representations of at least two aspects of the object, the signals entered into the memory via the processor are signals which correspond to specific values of light-emission by the cells of screen A and specific values of the transparency of the cells of screens B and C, for the purpose of changing said information.

8. The method according to claim 4 or 5, **characterized in that**, for the changing of the aforesaid information concerning two-dimensional representations of at least two aspects of the object, signals in the nature of noise are added to the memory via the processor, which signals correspond to the transparency of respective cells of at least one of screens B and C.

9. A method according to claim 4 or 5, **characterized in that** the position of the right and left eye of the at least one viewer is determined, and, in the event of a change in position of the said eyes of the at least one viewer, the information about said eye positions which is entered into the described system is modified.
